# EUROPÄISCHE PATENTSCHRIFT

(11) **EP 2 976 269 B1**
(45) Veröffentlichungstag und Bekanntmachung des Hinweises auf die Patenterteilung: **28.02.2018**
(21) Anmeldenummer: 14714918.1
(22) Anmeldetag: 07.03.2014
(51) Int. Cl.: B65D 17/00

(54) **GETRÄNKEDOSE**
DRINKS CAN
CANETTE POUR BOISSONS

(30) Priorität: 20.03.2013 AT 501902013
(43) Veröffentlichungstag der Anmeldung: 27.01.2016
(73) Patentinhaber: Seibersdorf Labor GmbH, 2444 Seibersdorf (AT)
(72) Erfinder: SCHMID, Gernot, A-2833 Bromberg (AT)
(74) Vertreter: Wildhack & Jellinek
(86) Internationale Anmeldenummer: PCT/AT2014/050059
(87) Internationale Veröffentlichungsnummer: WO 2014/146155

(56) Entgegenhaltungen:
- WO-A1-2012/102759
- DE-A1- 10 344 270
- JP-A- 2010 001 074
- JP-A- 2010 004 523
- US-A1- 2011 102 150

## Beschreibung

Die Erfindung betrifft eine Dose gemäß dem Oberbegriff des Patentanspruches 1. Eine solche Dose ist aus Dokument DE 103 44 270 A1 bekannt. Aus dem Stand der Technik ist eine Vielzahl von Getränkedosen bekannt, die mittels eines Einmalverschlusses geöffnet werden können, wobei mit dem Öffnen jeweils ein Verschlussbereich aus dem Körper der Dose herausgebrochen wird, sodass der Inhalt der Dose aus dieser entleert werden kann.

Es ist aus dem Stand der Technik auch möglich, an Gegenständen, insbesondere auch an Dosen, RFID-/NFC-Antennen und RFID-/NFC-Transponder anzuordnen, um mittels eines externen Datenkommunikationsgerätes Daten, die im Transponder abgespeichert sind, an das externe Kommunikationsgerät zu übertragen.

Aus dem Stand der Technik ist jedoch keine Möglichkeit bekannt, dass Daten ausschließlich dann von einem Behältnis an ein externes Datenkommunikationsgerät übertragbar sind, wenn ein Einmalverschluss auf dem Behältnis geöffnet wurde. Eine solche Vorrichtung könnte beispielsweise dazu verwendet werden, bestimmte, im Transponder abgespeicherte Informationen nur demjenigen zugänglich zu machen, der die jeweilige Dose bzw. den jeweiligen Behälter erworben hat. Typischerweise kann eine solche Dose vorteilhaft für Gewinnspiele eingesetzt werden, bei denen es erforderlich ist, dass der jeweilige Mitspieler die Dose gekauft bzw. geöffnet hat.

Aufgabe der Erfindung ist es somit, eine Dose zur Verfügung zu stellen, mit der Daten von einem an der Dose angeordneten Transponder an ein externes Datenkommunikationsgerät erst dann übertragbar sind, wenn die jeweilige Dose geöffnet ist und/oder mit einem externen Datenkommunikationsgerät auf einem auf der Dose angeordneten Transponder erst dann Daten abgespeichert werden können, wenn die jeweilige Dose geöffnet ist.

Die Erfindung löst diese Aufgabe bei der Dose der eingangs genannten Art mit den Merkmalen des Kennzeichens des Patentanspruches 1. Erfindungsgemäß ist bei einer Dose umfassend einen Körper, insbesondere aus Aluminium, wobei auf einer Stirnwand der Dose ein Verschlussbereich durch eine Sollbruchkante zumindest teilweise abgegrenzt ist und wobei die Dose ein Öffnungselement aufweist, das in seiner Ausgangslage an der Stirnwand der Dose zumindest teilweise, insbesondere flächig, anliegt und mit der Stirnwand an zumindest einer Stelle mittels eines Verbindungselements verbunden ist, das als Teil des Öffnungselements ausgebildet ist und insbesondere mit der Stirnwand verbunden ist, und wobei bei Verschwenken des Öffnungselements gegenüber der Dose von der Ausgangslage in eine Öffnungslage der Verschlussbereich längs der Sollbruchkante abreißt und sich in dem von der Sollbruchkante abgegrenzten Zwischenbereich eine Öffnung zum Entleeren des Inhalts der Dose ausbildet, vorgesehen,
- dass das Öffnungselement einen Trägerkörper aus elektrisch und/oder magnetisch isolierendem Material aufweist oder aus diesem besteht,
- dass das Öffnungselement eine am oder im Trägerkörper angeordnete Antenne sowie einen an die Antenne angeschlossenen Transponderchip trägt,
- dass eine elektrische Verbindungsleitung vorgesehen ist, die die beiden Anschlüsse der Antenne in der Ausgangslage miteinander elektrisch leitend verbindet und kurzschließt, und
- dass die elektrische Verbindungsleitung derart angeordnet ist, dass sie beim Öffnen der Dose durch das Verschwenken des Öffnungselements von der Ausgangslage in die Öffnungslage irreversibel unterbrochen wird und damit die Antenne aktiviert.

Durch diesen Aufbau wird gewährleistet, dass eine Datenkommunikation zwischen dem auf der Dose angeordneten Transponder und einem externen Datenkommunikationsgerät erst dann möglich ist, wenn die Dose geöffnet ist. Eine Datenkommunikation ist jedenfalls dann unmöglich, wenn das Öffnungselement in seiner Ausgangslage liegt und die Dose noch nicht geöffnet wurde.

Ein besonders einfacher Aufbau, der ein einfaches Reißen der Verbindungsleitung ermöglicht, sieht vor, dass die elektrische Verbindungsleitung teilweise in oder auf dem Verbindungselement und teilweise in oder auf dem Öffnungselement angeordnet ist, und die Verbindungsleitung beim Verschwenken des Öffnungselements gegenüber dem Verbindungselement reißt.

Um ein einfaches Abreißen zu ermöglichen, kann vorgesehen sein, dass die elektrische Verbindungsleitung in zumindest einem Zwischenbereich zwischen dem Verbindungselement und dem Öffnungselement eine Sollbruchstelle aufweist, die beim Verschwenken des Öffnungselements gegenüber dem Verbindungselement reißt.

Eine besonders einfacher Aufbau einer erfindungsgemäßen Dose sieht vor, dass die Antenne und der Transponderchip auf einer gemeinsamen Folie, insbesondere einem gemeinsamen Klebeetikett, angeordnet sind, die oder das am Öffnungselement angeordnet, insbesondere auf das Öffnungselement aufgeklebt ist.

Um eine einfache Trennung der Verbindungsleitung zu ermöglichen, kann vorgesehen sein, dass die elektrische Verbindungsleitung in oder auf der Folie angeordnet ist, und dass die Verbindungsleitung und die Folie teilweise auf dem Öffnungselement und teilweise auf dem Verbindungselement angeordnet sind.

Eine vorteilhafte Führung der Verbindungsleitung sowie eine einfache Integration der Verbindungsleitung in das Öffnungselement sieht vor, dass das Verbindungselement und/oder das Öffnungselement einen teilweise elektrisch leitfähigen Körper aufweist und dass die Verbindungsleitung durch den elektrisch leitfähigen Teil des Körpers des Verbindungselements und/oder des Öffnungselements ausgebildet ist.

Eine vorteilhafte Halterung des Verbindungselements mit der Stirnwand der Dose sieht vor, dass das Verbindungselement mit der Stirnwand der Dose verbunden ist, indem das Verbindungselement flächig ausgebildet ist und in einer Ebene parallel zur Stirnwand fest liegt oder verläuft und mit dieser verbunden ist, wobei das Verbindungselement insbesondere um eine normal zur Ebene der Stirnwand stehende Achse rotierbar angeordnet ist.

Um zusätzlich eine Abschirmung oder Verdrängung von auf die Antenne gerichteten elektromagnetischen Wellen in der Öffnungslage wirksam zu vermeiden, kann vorgesehen sein, dass bei einer Übertragungsfrequenz des Transponderchips im Bereich zwischen 100 kHz und 1000 MHz, insbesondere im Bereich von 120- bis 135 kHz, im Bereich von 13 bis 14 MHz oder im Bereich von 860- bis 910 MHz, die spezifische elektrische Leitfähigkeit des Trägermaterials des Öffnungselements kleiner ist als 1 S/m, **und**/**oder** dass die elektrische Permittivität des Trägermaterials des Öffnungselements kleiner ist als 100*8,854*10⁻¹² As/Vm, **und**/**oder** dass die magnetische Permeabilität des Öffnungselementes kleiner ist als (1+2,2*10⁻⁵)* 4*π*10⁻⁷ Vs/Am.

Eine besonders einfach herzustellende Ausführungsform der Erfindung sieht vor, dass der Verschlussbereich und die Sollbruchkante an einer Stirnwand der Dose ausgebildet sind.

Eine Anordnung, mit der ein vorteilhaftes Verschwenken des Öffnungselementes möglich ist, sieht vor, dass das Öffnungselement über eine Niete mit der Dose verbunden ist, wobei das Öffnungselement einen in seiner Ausgangslage am Verschlussbereich anliegenden Druckbereich zum Eindrücken des Verschlussbereichs aufweist.

Um die Dose einfach zu öffnen, kann hierbei vorgesehen sein, dass das Öffnungselement einen dem Druckbereich gegenüberliegenden Betätigungsbereich aufweist, wobei der Druckbereich und der Betätigungsbereich durch die Niete voneinander abgegrenzt sind und gemeinsam wie ein zweiarmiger, insbesondere durch die Niete (6) angelenkter, Hebel wirken.

Eine besonders einfache mechanische Ausgestaltung, die ein gutes Verschwenken des Öffnungselementes gegenüber der Dose ermöglichst, sieht vor, dass das Öffnungselement ein gegenüber seinem Körper verschwenkbares Verbindungselement aufweist, das mittels der Niete mit der Stirnwand der Dose verbunden ist.

Eine besonders einfache Positionierung des Transponders kann erreicht werden, indem in Ausgangslage der Transponderchip in einem Bereich des Öffnungselements angeordnet ist, der am Verschlussbereich anliegt.

Besonders vorteilhaft bei der Verwendung von Übertragungsfrequenzen von 120-135 kHz oder 10-15 MHz ist, dass die Antenne ringförmig ausgebildet ist und insbesondere entlang der Umfangskante des Öffnungselements in einer Einkerbung angeordnet ist.

Eine besonders vorteilhaft herstellbare Bauform sieht vor, dass das Öffnungselement zweistückig ausgebildet ist und einen an der Stirnwand angelenkten Basisteil sowie einen mit dem Basisteil verbundenen und einen elektrisch nicht leitfähigen Körper aufweisenden Antennenteil aufweist, wobei der Transponderchip und die Antenne im Antennenteil angeordnet, insbesondere eingegossen, sind und wobei der Basisteil zumindest einen Fortsatz, insbesondere zwei Fortsätze, aufweist, der mit dem Antennenteil verbunden ist und insbesondere an diesem anliegt.

Hierbei kann vorteilhaft vorgesehen sein, dass der Antennenteil einen Gehäuseteil und einen Ringfortsatz aufweist, wobei die Antenne zumindest teilweise im Ringfortsatz verläuft.

Ein vorteilhaft einfacher Aufbau des Öffnungselements sieht vor, dass der Gehäuseteil zumindest eine Rastausnehmung, insbesondere zwei Rastausnehmungen, aufweist, in die das Ende des Fortsatzes, insbesondere die beiden Enden der Fortsätze, des Basisteils eingreift, insbesondere eingerastet ist, und/oder wobei der Fortsatz oder die Fortsätze des Basisteils am Ringfortsatz des Antennenteils anliegen.

Um eine sichere Aktivierung des Transponderchips zu ermöglichen, kann vorgesehen sein, dass der Antennenteil im Bereich des Ringfortsatzes einen Steg aufweist, der einen ersten Teil des Ringfortsatzes mit einem zweiten Teil des Ringfortsatzes verbindet und zwei Ausnehmungen ausbildet, wobei eine der Ausnehmungen von der Niete durchsetzt ist und der Steg in Ausgangslage unterhalb des Verbindungsteils angeordnet ist und bei Betätigung des Öffnungselements reißt.

Ein bevorzugtes Ausführungsbeispiel der Erfindung wird anhand der folgenden Zeichnungsfiguren näher dargestellt.

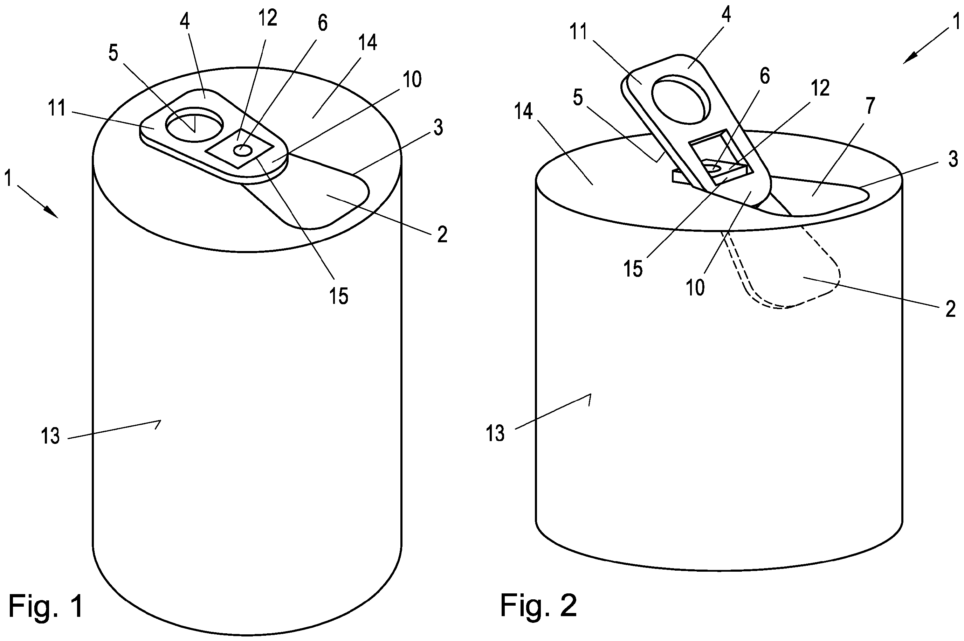

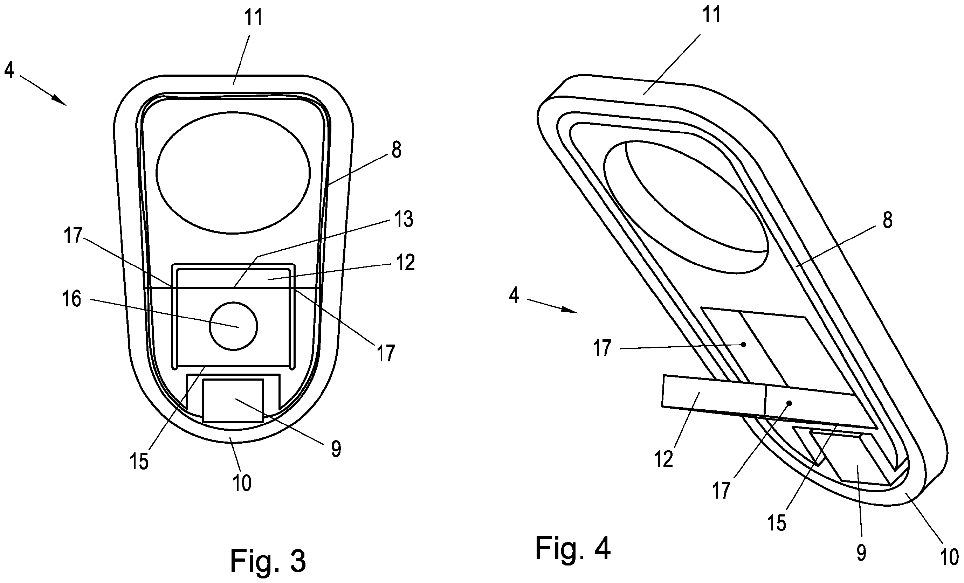

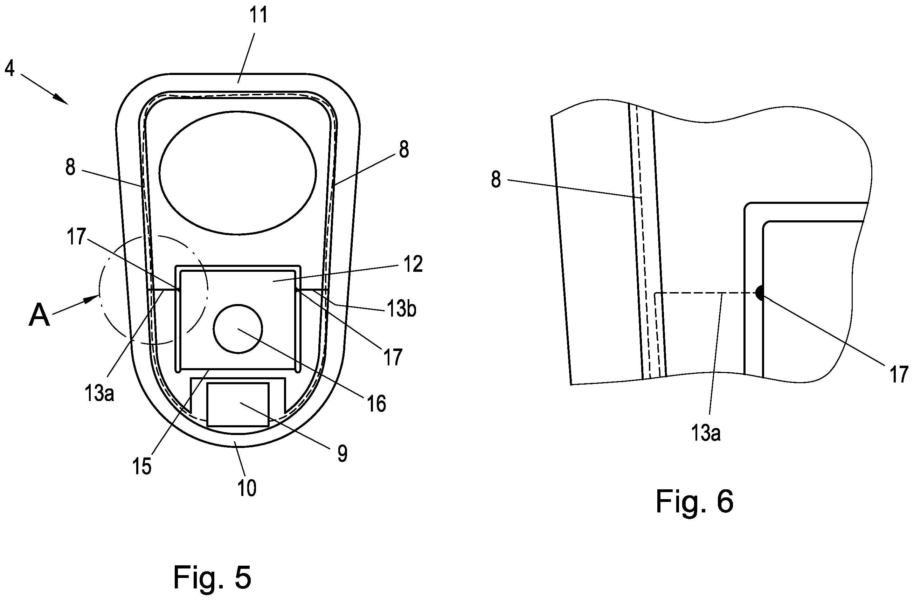

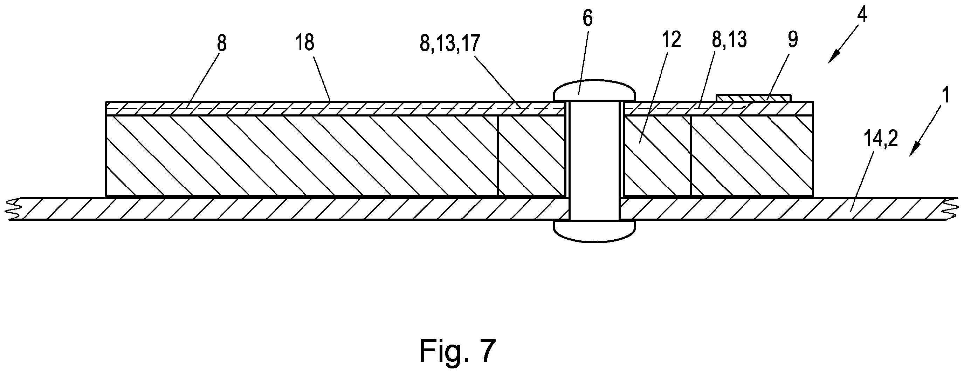

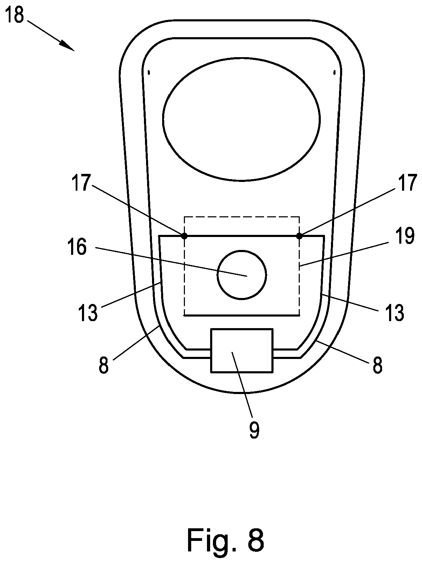

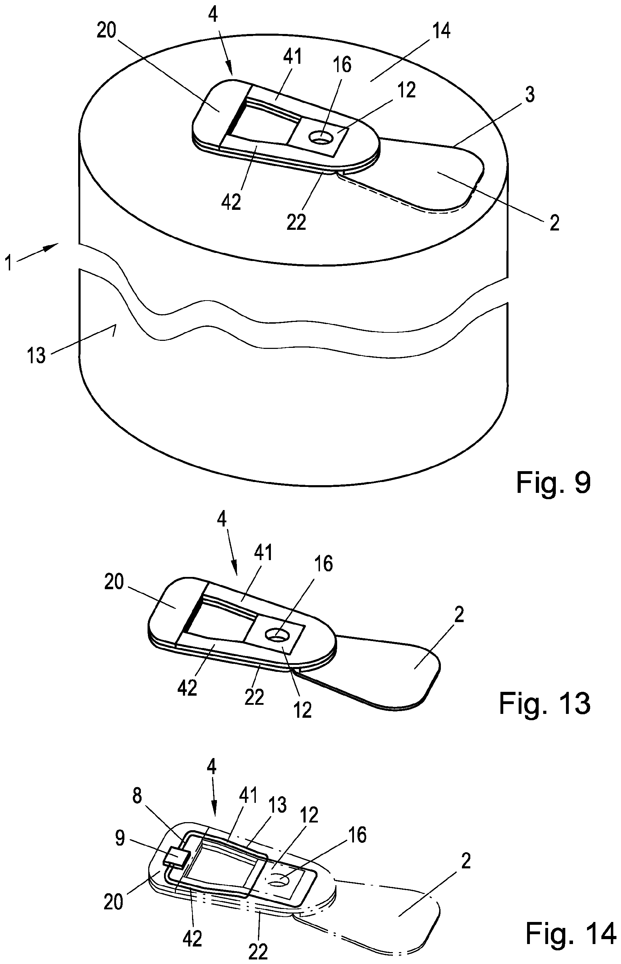

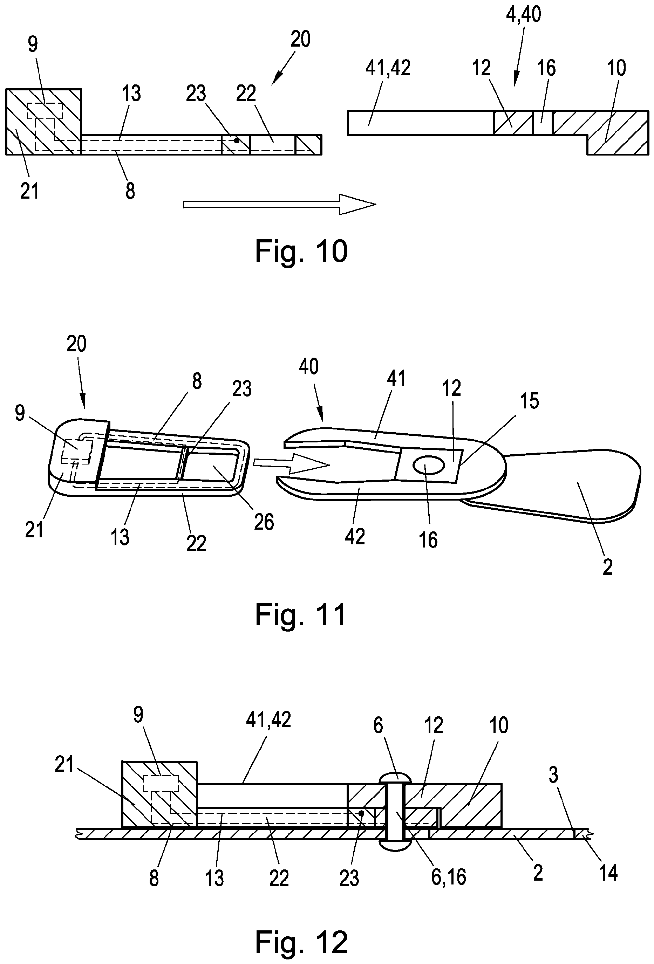

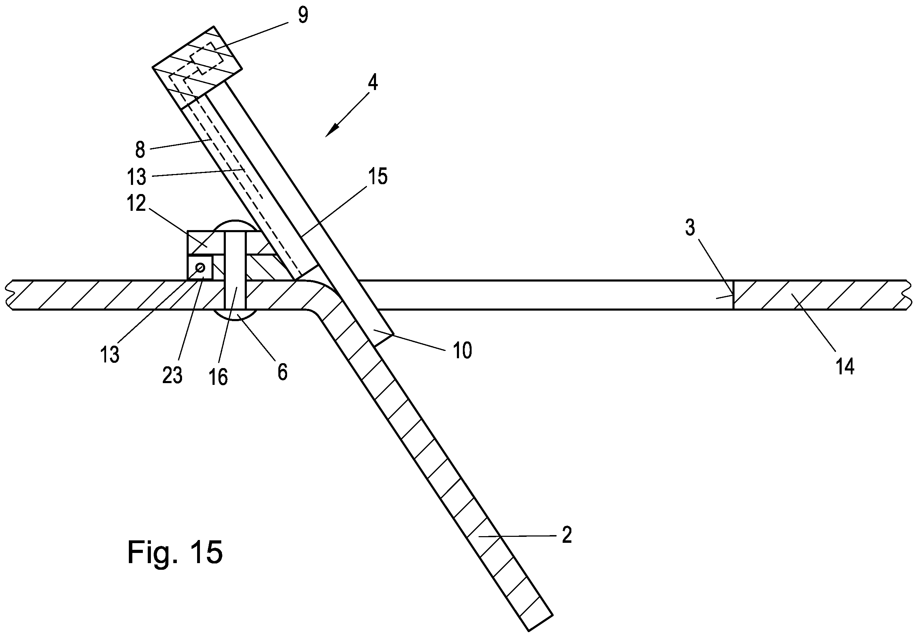

In **Fig. 1** ist eine erste Ausführungsform der Erfindung in Ausgangslage dargestellt. In **Fig. 2** ist die in **Fig. 1** dargestellte Ausführungsform der Erfindung in Öffnungslage dargestellt. **Fig. 3** zeigt das Öffnungselement der in **Fig. 1** dargestellten Ausführungsform der Erfindung in der Ausgangslage von oben. **Fig. 4** zeigt das Öffnungselement der in **Fig. 1** dargestellten Ausführungsform der Erfindung in Öffnungslage schräg von der Seite. **Fig. 5** zeigt ein Öffnungselement gemäß einer zweiten Ausführungsform der Erfindung in der Ausgangslage von oben. **Fig. 6** zeigt ein Detail aus **Fig. 5**. **Fig. 7** zeigt eine dritte Ausführungsform der Erfindung in Ausgangslage in Schnittdarstellung. **Fig. 8** zeigt ein Klebeetikett, das bei der dritten Ausführungsform der Erfindung verwendet wird. **Fig. 9** zeigt eine vierte Ausführungsform der Erfindung in Ausgangslage. **Fig. 10** zeigt zwei Teile, aus denen das Öffnungselement der vierten Ausführungsform der Erfindung erstellt wird, in Schnittansicht. **Fig. 11** zeigt die beiden Teile in Schrägansicht. **Fig. 12** zeigt eine Schnittdarstellung der vierten Ausführungsform der Erfindung in Ausgangslage. **Fig. 13** zeigt das Öffnungselement der dritten Ausführungsform der Erfindung in Schrägansicht. **Fig. 14** zeigt das Öffnungselement der dritten Ausführungsform der Erfindung in Schrägsicht, wobei der Körper des Öffnungselements durchsichtig dargestellt ist. In **Fig. 15** ist die Stirnwand der Dose sowie das Öffnungselement in Öffnungsstellung in Schnittansicht dargestellt.

In **Fig. 1** ist eine zylindrische Dose 1 gemäß einer ersten Ausführungsform der Erfindung dargestellt. Der Körper der Dose 1 besteht zur Gänze aus Aluminium, wobei die Dose 1 an ihrer Mantelfläche 13 eine bedruckte, dekorative Folie aufweisen kann. An der Stirnwand 14 der Dose 1 ist ein Verschlussbereich 2 vorgesehen, der durch eine Sollbruchkante 3 abgegrenzt ist. Ferner weist die Dose 1 ein Öffnungselement 4 auf, das über eine eine Ausnehmung 16 (**Fig. 3**) des Öffnungselementes 4 durchsetzende Niete 6 mit der Stirnwand 14 der Dose 1 verbunden ist. Das Öffnungselement 4 verfügt über ein gegenüber seinem Körper verschwenkbares Verbindungselement 12 mit der Ausnehmung 16, das mittels der Niete 6 mit der Stirnwand 14 der Dose 1 verbunden ist, parallel zur Stirnwand 14 liegt und das insbesondere an der Stirnwand 14 der Dose 1 flächig anliegt. Üblicherweise lässt sich das Öffnungselement 4 um die Nietenachse der Niete 6 drehen, es liegt im vorliegenden Ausführungsbeispiel keine bewegungsstarre Verbindung des Öffnungselements 4 mit der Dose 1 vor. Das Öffnungselement liegt an der Stirnwand 14 der Dose 1 flächig an.

In **Fig. 2** ist die in **Fig. 1** dargestellte Ausführungsform der Dose 1 in Öffnungslage dargestellt. Beim Vorgang des Öffnens wird ein dem Verschlussbereich 2 abgewandter Betätigungsbereich 11 des Öffnungselementes 4 angehoben und das gesamte Öffnungselement 4 bezüglich einer zwischen dem Verbindungselement 12 und dem Körper des Öffnungselementes 4 liegenden Anlenkkante 15 verschwenkt. Hierdurch wird der am Verschlussbereich 2 anliegende Druckbereich 10 des Öffnungselementes 4 in Richtung des Verschlussbereiches 2 ins Innere der Dose 1 gedrückt, wodurch der Verschlussbereich 2 entlang der Sollbruchkante 3 von der Stirnwand 14 der Dose 1 abreißt und in die Dose 1 eintritt. Hierdurch wird eine Öffnung 7 geschaffen, über die die Dose 1 entleert werden kann.

In **Fig. 4** ist das Öffnungselement 4 im Detail dargestellt. Das Öffnungselement 4 weist einen Trägerkörper aus elektrisch und magnetisch isolierendem Material auf, wobei auf der der Stirnwand 14 zugewandten Seite des Öffnungselementes 4 eine Einkerbung vorgesehen ist, die ringförmig geschlossen im Öffnungselement 4 verläuft. In dieser Einkerbung verlaufen die Drahtwicklungen der Antenne 8, die mit einem im Druckbereich 10 des Öffnungselementes 4 gelegenen Transponderchip 9 verbunden ist. Die Antenne 8 verläuft entlang des Randes der unteren Stirnfläche des Öffnungselementes 4, die der Stirnwand 14 der Dose 1 zugewandt ist.

Weiters ist in **Fig. 3** eine Verbindungsleitung 13 dargestellt, die die beiden Anschlüsse der Antenne 8, miteinander kurzschließt. Solange die Dose 1 ungeöffnet und in der Ausgangslage ist und die Verbindungsleitung 13 intakt ist, sind die beiden Anschlüsse der Antenne 8 miteinander elektrisch leitend verbunden und kurzgeschlossen. Die elektrische Verbindungsleitung 13 wird derart angeordnet, dass sie beim Öffnen der Dose 1 durch das Verschwenken des Öffnungselements 4 von der Ausgangslage in die Öffnungslage irreversibel unterbrochen und damit die Antenne 8 aktiviert.

In der hier dargestellten Ausführungsform wird dies dadurch erreicht, dass die Verbindungsleitung 13 an den Transponderchip 9 angeschlossen ist, wobei jedes der beiden Enden der Verbindungsleitung 13 jeweils mit den beiden mit dem Transponderchip 9 verbundenen Anschlüssen der Antenne 8 verbunden ist. Die Verbindungsleitung 13, der Transponderchip 9 und die Antenne 8 sind parallel geschaltet. Die Verbindungsleitung 13 verläuft im Körper des Öffnungselements 4 und tritt aus diesem Körper im Bereich des Verbindungselements 12 aus. In der vorliegenden Ausführungsform verläuft die Verbindungsleitung 13 im Verbindungselement 12 und schließlich im gegenüberliegenden Teil des Körpers des Öffnungselements 4 zurück zum Transponderchip 9. Im Zwischenbereich zwischen dem Körper des Öffnungselements 4 und dem Verbindungselement 12 weist die Verbindungsleitung 13 Sollbruchstellen 17 auf. In **Fig. 4** ist das Öffnungselement 4 in geöffneter Stellung dargestellt, wobei die Sollbruchstellen 17 von der Seite sichtbar sind, an denen die Verbindungsleitung 13 gerissen ist. Die Sollbruchstellen 17 befinden sich in Bereichen des Verbindungselements 12 und des Öffnungselements 4, die durch das Verschwenken des Öffnungselements 4 von in die Öffnungslage gegeneinander bewegt und voneinander entfernt werden. Die Sollbruchstellen 17 sind an dem dem Druckbereich 10 sowie der Anlenkkante 15 gegenüberliegenden Endbereich des Verbindungselements 12 angeordnet, da dieser Endbereich im Zuge des Verschwenkens in die Öffnungslage aufgrund der Hebelverhältnisse des Öffnungselements 4 einen möglichst großen Weg zurücklegt.

Auch bei einer zweiten Ausführungsform der Erfindung ist die Verbindungsleitung 13, wie in **Fig. 5** dargestellt, derart angeordnet, dass sie nach dem Verschwenken des Öffnungselements 4 in die Öffnungslage abreißt und die Antenne 8 aktiviert bzw. deren Kurzschluss beendet. Wie in **Fig. 5** dargestellt, ist der Verbindungsteil 12 leitend ausgeführt, wobei der Verbindungsteil 12 als Teil der Verbindungsleitung 13 fungiert. Die übrigen Teile 13a, 13b der Verbindungsleitung 13 sind jeweils über Sollbruchstellen 17 jeweils mit dem Verbindungsteil 12 elektrisch leitend verbunden. **Fig. 6** zeigt den Bereich A (Fig. 5) einer der Sollbruchstellen 17 im Detail.

Bei einer dritten Ausführungsform der Erfindung, dargestellt in **Fig. 7**, werden sämtliche elektromagnetisch aktiven Komponenten, d.h. die Antenne 8, der Transponderchip 9 sowie die Verbindungsleitung 13 mitsamt den Sollbruchstellen 17 gemeinsam auf einer Folie 18 in Form eines Klebeetiketts 18 angeordnet, wobei das Klebeetikett 18 auf dem Öffnungselement 14 aufgeklebt ist. Die elektrische Verbindungsleitung 13 kann in oder auf dem Klebeetikett 18 angeordnet sein. Die Verbindungsleitung 13 und die Folie 18 sind teilweise auf dem Öffnungselement 4 und teilweise auf dem Verbindungselement 12 angeordnet. Das Klebeetikett 18, das in **Fig. 8** von oben dargestellt ist, weist im Bereich zwischen dem Verbindungselement 12 und dem Körper des Öffnungselements 4, insbesondere bei der Sollbruchstellen 17, eine Perforationskante 19 auf, die beim Verschwenken des Öffnungselements 4 reißt und auch das Abreißen der Verbindungsleitung 13 an den Sollbruchstellen 17 ermöglicht.

In den **Fig. 9 bis 14** ist eine vierte Ausführungsform der Erfindung dargestellt. Bei dieser Ausführungsform der Erfindung ist das Öffnungselement 4, wie in **Fig. 10, 11** dargestellt, zweiteilig ausgebildet und umfasst einen ersten, aus nicht leitfähigem Material bestehenden Antennenteil 20 sowie einen zweiten, aus leitfähigem Material bestehenden Basisteil 40. Der Antennenteil 20 ist insbesondere aus Polyethylen ausgebildet. Der Antennenteil 20 umfasst einen ersten Gehäuseteil 21, in dem der NFC-Transponderchip 9 eingebettet oder eingegossen ist. Weiters umfasst der Antennenteil 20 einen ringförmigen Ringfortsatz 22, der vom Gehäuseteil 21 abgeht und der gemeinsam mit dem Gehäuseteil 21 einen Ringkörper ausbildet. Im Inneren des Ringkörpers ist die Antenne 8 angeordnet. Die beiden Enden der Antenne 8 sind mit dem NFC-Transponderchip 9 verbunden.

Der Basisteil 40 und der Antennenteil 20 entsprechen, wie in **Fig. 12** dargestellt, dem in den **Fig. 3 und 4** dargestellten Öffnungselement 4 mit dem Unterschied, dass anstelle des geschlossenen Verlaufs zwei in Richtung des Antennenteils ragende Rastfortsätze 41, 42 ragen. Diese beiden Rastfortsätze 41, 42 liegen an einem vom Antennenteil 20 ausgebildeten Ringfortsatz 22 an. Die beiden vorderen Endbereiche der Rastfortsätze 41, 42 greifen in Öffnungen, die im Gehäuseteil 21 des Antennenteils 20 vorgesehen sind, ein, wodurch eine nicht zerstörungsfrei lösbare Verbindung zwischen dem Antennenteil 20 und dem Basisteil 40 hergestellt wird.

Wie in **Fig. 11** dargestellt, weist der Antennenteil 20 einen Steg 23 auf, der die beiden an den Rastfortsätzen 41, 21 anliegenden Teile des Antennenteils 20 miteinander verbindet. Die Verbindungsleitung 13 verläuft im Inneren des Antennenteils 20, wobei die beiden Enden der Verbindungsleitung 13 jeweils an einem der Anschlüsse der Antenne 8 und des Transponderchips 9 angeschlossen sind. Solange die Verbindungsleitung 13 intakt sind, ist die Antenne 8 sowie der Transponderchip 9 von der Verbindungsleitung 13 kurzgeschlossen, sodass eine Datenkommunikation zwischen einem externen Datenkommunikationsgerät über die Antenne 8 mit dem Transponderchip 9 unmöglich ist.

Die Verbindungsleitung 13 verläuft teilweise im Steg 23. Der Steg 23 teilt den durch den Antennenteil 20 ausgebildeten Ringfortsatz 22 in zwei voneinander getrennte, separate Ringe, wobei eine vordere Ausnehmung 26 ausgebildet wird. Diese Ausnehmung 26 befindet sich im Bereich der Ausnehmung 16 des Verbindungsteils 12 und ist von der Niete 6, wie in **Fig. 12** dargestellt, durchsetzt. Bei der konkreten Anordnung des Basisteils und/oder gegenüber dem Antennenteil 20 und der dadurch bewirkten Ausbildung des Öffnungselements 4 kommt der Steg 23 im Bereich unterhalb des Verbindungselements 12 zu liegen. Wird das Öffnungselement 4 von der Ausgangslage in die Öffnungslage verschwenkt, so wird der Steg 23 vom Verbindungselement 12 zurückgehalten und aufgrund der auf dem Steg 23 über das Verbindungselement 12 einwirkenden Hebelkräfte nach einer Verschwenkung in die Öffnungslage abgerissen. Dadurch wird auch die im Steg 23 verlaufende Verbindungsleitung 13 getrennt, sodass die bislang im Kurzschluss befindliche Antenne 8 sowie der im Kurzschluss befindliche Transponderchip 9 nunmehr funktionsfähig werden und mit einem externen Datenkommunikationsgerät eine Datenkommunikation herstellen können.

In **Fig. 15** ist die Stirnwand 14 der Dose sowie das Öffnungselement 4 in Öffnungsstellung dargestellt. Durch das Verschwenken des Öffnungselements 4 drückt der Fortsatz 10 des Öffnungselements 4 auf den Verschlussbereich 2 der Dose 1 und drückt diesen ein, sodass sich eine Öffnung in der Stirnwand 14 der Dose 1 ausbildet. Durch das Verschwenken des Öffnungselements 4 gegenüber der Stirnwand 14 der Dose 1 wird das Verbindungselement 12 an der Kante 15 geknickt und der Basisteil sowie der Antennenteil um die Kante 15 verschwenkt. Da der Steg 23 durch den Verbindungsteil 12 zurückgehalten wird, reißt der Steg 23 an seinen beiden Enden ab, wobei auch die im Steg 23 verlaufende Verbindungsleitung 13 getrennt wird.

Durch die besondere bauliche Ausgestaltung des Öffnungselements 4 wird zusätzlich erreicht, dass das Öffnungselement 4 selbst elektromagnetische Wellen weder abschirmt noch verdrängt, sodass im geöffneten Zustand eine besonders gute Funkverbindung zwischen dem Transponder 9 über die Antenne 8 zu einem externen Datenkommunikationsgerät herstellbar ist.

Normalerweise werden Dosen 1 vollständig aus Aluminium oder einem sonstigen Metall gefertigt. Es kann, um neben der erfindungsgemäßen Wirkung eine zusätzliche Feldverdrängung zu ermöglichen, vorgesehen sein, dass derjenige Wand- und Oberflächenbereich 5 der Dose 1, an dem das Öffnungselement 4 anliegt, elektrisch und/oder magnetisch leitfähig ist. Dies ist gerade dann von Vorteil, wenn produktions- oder transportbedingt die Verbindungsleitung 13 getrennt ist oder wird und dadurch eine elektromagnetische Kommunikation über die Antenne 8 möglich wäre. Der Wand- oder Oberflächenbereich 5 der Dose 1, an den das Öffnungselement 4 anliegt, weist im vorliegenden Ausführungsbeispiel eine elektrische Leitfähigkeit von zumindest 10⁶ S/m, insbesondere von zumindest 10 S/m auf. Zudem weist die Dose 1 im Wand- und Oberflächenbereich 5, an den das Öffnungselement 4 anliegt, eine magnetische Permeabilität von zumindest 4*π*10⁻⁷ Vs/Am, insbesondere von zumindest 0,99*4*π*10⁻⁷ Vs/Am auf. Aluminium, das typischerweise als Material für den Wand- und/oder Oberflächenbereich der Dose 1, insbesondere für die gesamte Dose 1, eingesetzt wird, weist eine elektrische Leitfähigkeit von 37*10⁶ S/m und eine magnetische Permeabilität von (1+2,2*10⁻⁵)* 4*π*10⁻⁷ Vs/Am auf.

Typischerweise werden zur Übertragung Frequenzen von 13,56 MHz verwendet. Selbstverständlich kann auch alternativ eine andere Übertragungsfrequenz, etwa von 120-135 kHz oder eine Übertragungsfrequenz von 860-910 MHz verwendet werden.

## Patentansprüche

1. Dose (1) umfassend einen Körper, insbesondere aus Aluminium, wobei auf einer Stirnwand (14) der Dose (1) ein Verschlussbereich (2) durch eine Sollbruchkante (3) zumindest teilweise abgegrenzt ist und wobei die Dose (1) ein Öffnungselement (4) aufweist, das in seiner Ausgangslage an der Stirnwand (14) der Dose (1) zumindest teilweise anliegt und mit der Stirnwand (14) an zumindest einer Stelle mittels eines Verbindungselements (12) verbunden ist, das als Teil des Öffnungselements (4) ausgebildet ist, und insbesondere mit der Stirnwand (14) verbunden ist,
- wobei bei Verschwenken des Öffnungselements (4) gegenüber der Dose (1) von der Ausgangslage in eine Öffnungslage der Verschlussbereich (2) längs der Sollbruchkante (3) abreißt und sich in dem von der Sollbruchkante (3) abgegrenzten Zwischenbereich eine Öffnung (7) zum Entleeren des Inhalts der Dose (1) ausbildet,
**dadurch gekennzeichnet,**
- **dass** das Öffnungselement (4) einen Trägerkörper aus elektrisch und/oder magnetisch isolierendem Material aufweist oder aus diesem besteht,
- **dass** das Öffnungselement (4) eine am oder im Trägerkörper angeordnete Antenne (8) sowie einen an die Antenne (8) angeschlossenen Transponderchip (9) trägt,
- **dass** eine elektrische Verbindungsleitung (13) vorgesehen ist, die die beiden Anschlüsse der Antenne (8) in der Ausgangslage miteinander elektrisch leitend verbindet und kurzschließt, und
- **dass** die elektrische Verbindungsleitung (13) derart angeordnet ist, dass sie beim Öffnen der Dose (1) durch das Verschwenken des Öffnungselements (4) von der Ausgangslage in die Öffnungslage irreversibel unterbrochen wird und damit die Antenne (8) aktiviert.

2. Dose nach Anspruch 1, **dadurch gekennzeichnet, dass** die elektrische Verbindungsleitung (13) teilweise in oder auf dem Verbindungselement (12) und teilweise in oder auf dem Öffnungselement (4) angeordnet ist, und die Verbindungsleitung (13) beim Verschwenken des Öffnungselements (4) gegenüber dem Verbindungselement (12) reißt.

3. Dose nach Anspruch 1 oder 2, **dadurch gekennzeichnet, dass** die elektrische Verbindungsleitung (13) in zumindest einem Zwischenbereich zwischen dem Verbindungselement (12) und dem Öffnungselement (4) eine Sollbruchstelle aufweist, die beim Verschwenken des Öffnungselements (4) gegenüber dem Verbindungselement (12) reißt.

4. Dose (1) nach einem der vorangehenden Ansprüche, **dadurch gekennzeichnet,**
- **dass** die Antenne (8) und der Transponderchip (9) auf einer gemeinsamen Folie, insbesondere einem gemeinsamen Klebeetikett (18), angeordnet sind, die oder das am Öffnungselement (4) angeordnet, insbesondere auf das Öffnungselement (4) aufgeklebt ist, wobei insbesondere
- die elektrische Verbindungsleitung (13) in oder auf der Folie angeordnet ist, und dass die Verbindungsleitung (13) und die Folie teilweise auf dem Öffnungselement (4) und teilweise auf dem Verbindungselement (12) angeordnet sind.

5. Dose nach einem der vorangehenden Ansprüche, **dadurch gekennzeichnet,**
- **dass** das Verbindungselement (12) und/oder das Öffnungselement (4) einen teilweise elektrisch leitfähigen Körper aufweist und dass die Verbindungsleitung (13) durch den elektrisch leitfähigen Teil des Körpers des Verbindungselements (12) und/oder des Öffnungselements (4) ausgebildet ist und/oder
- **dass** das Verbindungselement (12) mit der Stirnwand (14) der Dose verbunden ist, indem das Verbindungselement (12) flächig ausgebildet ist und in einer Ebene parallel zur Stirnwand (14) fest liegt oder verläuft und mit dieser verbunden ist, wobei das Verbindungselement (12) insbesondere um eine normal zur Ebene der Stirnwand (14) stehende Achse rotierbar angeordnet ist.

6. Dose (1) nach einem der vorangehenden Ansprüche, **dadurch gekennzeichnet, dass** bei einer Übertragungsfrequenz des Transponderchips (9) im Bereich zwischen 100 kHz und 1000 MHz, insbesondere im Bereich von 120-135 kHz, im Bereich von 13 bis 14 MHz oder im Bereich von 860-910 MHz die spezifische elektrische Leitfähigkeit des Trägermaterials des Öffnungselements (4) kleiner ist als 1 S/m, **und**/**oder**
- dass die elektrische Permittivität des Trägermaterials des Öffnungselements (4) kleiner ist als 100*8,854*10⁻¹² As/Vm, **und**/**oder**
- dass die magnetische Permeabilität des Trägermaterials des Öffnungselements (4) kleiner ist als 1,001*4*π*10⁻⁷ Vs/Am.

7. Dose (1) nach einem der vorangehenden Ansprüche, **dadurch gekennzeichnet, dass** der Verschlussbereich (2) und die Sollbruchkante (3) an einer Stirnwand (14) der Dose (1) ausgebildet sind.

8. Dose (1) nach einem der vorangehenden Ansprüche, **dadurch gekennzeichnet,**
- **dass** das Öffnungselement (4) über eine Niete (6) mit der Dose (1) verbunden ist, wobei das Öffnungselement (4) einen in seiner Ausgangslage am Verschlussbereich (2) anliegenden Druckbereich (10) zum Eindrücken des Verschlussbereichs (2) aufweist, wobei insbesondere
- das Öffnungselement einen dem Druckbereich (10) gegenüberliegenden Betätigungsbereich (11) aufweist, wobei der Druckbereich (10) und der Betätigungsbereich (11) durch die Niete (6) voneinander abgegrenzt sind und gemeinsam wie ein zweiarmiger, insbesondere durch die Niete (6) angelenkter, Hebel wirken.

9. Dose (1) nach Anspruch 8, **dadurch gekennzeichnet, dass** das Öffnungselement (4) ein gegenüber seinem Körper verschwenkbares Verbindungselement (12) aufweist, das mittels der Niete (6) mit der Stirnwand der Dose (1) verbunden ist.

10. Dose (1) nach einem der vorangehenden Ansprüche, **dadurch gekennzeichnet,**
- **dass** in Ausgangslage der Transponderchip (9) in einem Bereich des Öffnungselements (4) angeordnet ist, der am Verschlussbereich (2) anliegt und/oder
- **dass** die Antenne (8) ringförmig ausgebildet ist und insbesondere entlang der Umfangskante des Öffnungselements (4) in einer Einkerbung angeordnet ist.

11. Dose gemäß einem der vorangehenden Ansprüche, **dadurch gekennzeichnet, dass** das Öffnungselement (4) zweistückig ausgebildet ist und einen an der Stirnwand angelenkten Basisteil (40) sowie einen mit dem Basisteil (40) verbundenen und einen elektrisch nicht leitfähigen Körper aufweisenden Antennenteil (20) aufweist, wobei der Transponderchip (9) und die Antenne im Antennenteil (20) angeordnet, insbesondere eingegossen, sind und wobei der Basisteil (40) zumindest einen Fortsatz (41, 42), insbesondere zwei Fortsätze (41, 42) aufweist, der mit dem Antennenteil (20) verbunden ist.

12. Dose nach Anspruch 11, **dadurch gekennzeichnet, dass** der Antennenteil (20) einen Gehäuseteil (21) und einen Ringfortsatz (22) aufweist, wobei die Antenne (8) zumindest teilweise im Ringfortsatz (22) verläuft.

13. Dose nach Anspruch 11 oder 12, **dadurch gekennzeichnet, dass** der Gehäuseteil (21) zumindest eine Rastausnehmung, insbesondere zwei Rastausnehmungen, aufweist, in die das Ende des Fortsatzes (41, 42), insbesondere die beiden Enden der Fortsätze (41, 42), des Basisteils (40) eingreift, insbesondere eingerastet ist, und/oder dass der Fortsatz oder die Fortsätze (41, 42) des Basisteils (40) am Ringfortsatz (22) des Antennenteils (20) anliegen.

14. Dose nach einem der Ansprüche 11 bis 13, **dadurch gekennzeichnet, dass** der Antennenteil (20) im Bereich des Ringfortsatzes (22) einen Steg (23) aufweist, der einen ersten Teil des Ringfortsatzes (22) mit einem zweiten Teil des Ringfortsatzes (22) verbindet und zwei Ausnehmungen ausbildet, wobei eine der Ausnehmungen (26) von der Niete (6) durchsetzt ist und der Steg (23) in Ausgangslage unterhalb des Verbindungsteils (12) angeordnet ist und bei Betätigung des Öffnungselements (4) reißt.

## Claims

1. A can (1) comprising a body, in particular made from aluminium, wherein a closure region (2) on an end wall (14) of the can (1) is at least partially delimited by a predetermined breaking edge (3) and wherein the can (1) comprises an opening element (4), which in the starting position thereof lies at least partially against the end wall (14) of the can (1) and is connected to the end wall (14) at least one point by means of a connecting element (12), which is formed as part of the opening element (4) and in particular is connected with the end wall (14),
- wherein on pivoting the opening element (4) with respect to the can (1) from the starting position into an open position, the closure region (2) breaks along the predetermined breaking edge (3) and forms an opening (7) in the intermediate region delimited by the predetermined breaking edge (3) in order to empty the contents of the can (1),
**characterised in that**
- the opening element (4) comprises a carrier body made of electrically and/or magnetically insulating material or consists of same,
- the opening element (4) bears an antenna (8) arranged on or in the carrier body and a transponder chip (9) connected to the antenna (8),
- an electrical connection lead (13) is provided, which electrically connects together and short-circuits the two connections of the antenna (8) in the starting position, and
- the electrical connection lead (13) is arranged such that it is irreversibly interrupted on opening of the can (1) through the pivoting of the opening element (4) from the starting position into the open position, and the antenna (8) is thus activated.

2. The can according to claim 1, **characterised in that** the electrical connection lead (13) is arranged in part in or on the connecting element (12) and in part in or on the opening element (4), and the connection lead (13) tears on pivoting of the opening element (4) with respect to the connecting element (12).

3. The can according to claim 1 or 2, **characterised in that** the electrical connection lead (13) comprises a predetermined breaking point in at least one intermediate region between the connecting element (12) and the opening element (4), which tears on pivoting of the opening element (4) with respect to the connecting element (12).

4. The can (1) according to any one of the preceding claims, **characterised in that**
- the antenna (8) and the transponder chip (9) are arranged on a common foil, in particular a common adhesive label (18), which is arranged on the opening element (4), in particular is glued on the opening element (4), wherein in particular
- the electrical connection lead (13) is arranged in or on the foil, and **in that** the connection lead (13) and the foil are arranged in part on the opening element (4) and in part on the connecting element (12).

5. The can according to any one of the preceding claims, **characterised in that**
- the connecting element (12) and/or the opening element (4) comprises a partially electrically conductive body and **in that** the connecting lead (13) is formed by the electrically conducting part of the body of the connecting element (12) and/or of the opening element (4), and/or
- the connecting element (12) is connected to the end wall (14) of the can, **in that** the connecting element (12) is formed flat and lies or extends fixed in a plane parallel to the end wall (14) and is connected to same, wherein the connecting element (12) is arranged in particular able to rotate about an axis that is normal to the plane of the end wall (14).

6. The can (1) according to any of the preceding claims, **characterised in that** at a transmission frequency of the transponder chip (9) in the range between 100 kHz and 1000 MHz, in particular in the range 120-135 kHz, in the range from 13 to 14 MHz or in the range 860-910 MHz, the specific electrical conductivity of the carrier material of the opening element (4) is less than 1 S/m, **and**/**or**
- **in that** the electrical permittivity of the carrier material of the opening element (4) is less than 100*8.854*10⁻¹² As/Vm, **and**/**or**
- **in that** the magnetic permeability of the carrier material of the opening element (4) is less than 1.001*4*π*10⁻⁷ Vs/Am.

7. The can (1) according to any one of the preceding claims, **characterised in that** the closure region (2) and the predetermined breaking edge (3) are formed on an end wall (14) of the can (1).

8. The can (1) according to any one of the preceding claims, **characterised in that**
- the opening element (4) is connected to the can (1) by means of a rivet (6), wherein, the opening element (4) comprises a pressure region (10) lying against the closure region (2) in the starting position thereof, for pushing in of the closure region (2), wherein in particular
- the opening element comprises an actuation region (11) opposite the pressure region (10), wherein the pressure region (10) and the actuation region (11) are separated from each other by the rivet (6) and act together as a two-armed lever, in particular hinged by the rivet (6).

9. The can (1) according to claim 8, **characterised in that** the opening element (4) comprises a connecting element (12) that can be pivoted against the can body, that is connected to the end wall of the can (1) by means of the rivet (6).

10. The can (1) according to any one of the preceding claims, **characterised in that**
- in the starting position, the transponder chip (9) is arranged in a region of the opening element (4) which lies against the closure region (2) and/or
- the antenna (8) is annular and is arranged, in particular, along the circumferential edge of the opening element (4) in an indentation.

11. The can according to any one of the preceding claims, **characterised in that** the opening element (4) is formed in two parts and comprises a base part (40) hinged on the end wall and an antenna part (2) connected to the base part (40) and having an electrically non-conductive body, wherein the transponder chip (9) and the antenna are arranged, in particular cast, in the antenna part (20) and wherein the base part (40) comprises at least one extension (41, 42), in particular two extensions (41, 42), which are connected to the antenna part (20).

12. The can according to claim 11, **characterised in that** the antenna part (20) comprises a housing part (21) and an annular extension (22), wherein the antenna (8) extends at least partially in the annular extension (22).

13. The can according to claim 11 or 12, **characterised in that** the housing part (21) comprises at least one latching recess, in particular two latching recesses, into which the end of the extension (41,42), in particular both ends of the extensions (41, 42), of the base part (40) engage, in particular are latched, and/or that the extension or the extensions (41, 42) of the base part (40) lie against the annular extension (22) of the antenna part (20).

14. The can according to one of claims 11 to 13, **characterised in that** the antenna part (20) comprises a bar (23) in the region of the annular extension (22), which connects a first part of the annular extension (22) with a second part of the annular extension (22) and forms two recesses, wherein one of the recesses (26) is passed through by the rivet (6) and, in the starting position, the bar (23) is arranged underneath the connecting part (12) and tears on actuation of the opening element (4).

## Revendications

1. Canette (1) comprenant un corps, en particulier en aluminium, dans laquelle une zone de fermeture (2) est délimitée sur une paroi frontale (14) de la canette (1) au moins partiellement par une ligne de rupture théorique (3) et dans laquelle la canette (1) présente un élément d'ouverture (4), qui, dans sa position initiale, est plaqué au moins partiellement sur la paroi frontale (14) de la canette (1) et qui est relié à la paroi frontale (14) au moins en un endroit au moyen d'un élément de liaison (12), qui est conçu sous la forme d'une partie de l'élément d'ouverture (4) et est en particulier relié à la paroi frontale (14),
- dans lequel, lors du pivotement de l'élément d'ouverture (4) par rapport à la canette (1), de la position initiale jusque dans une position d'ouverture, la zone de fermeture (2) se rompt le long de la ligne de rupture théorique (3) et une ouverture (7) permettant de vider le contenu de la canette (1) se forme dans la zone intermédiaire délimitée par la ligne de rupture théorique (3), **caractérisée en ce**
- **que** l'élément d'ouverture (4) possède un corps de support en matériau électriquement et/ou magnétiquement isolant ou est constitué de celui-ci,
- en ce que l'élément d'ouverture (4) porte une antenne (8) disposée sur ou dans le corps de support ainsi qu'une puce de transpondeur (9) reliée à l'antenne (9),
- en ce qu'une ligne de raccordement électrique (13) est prévue, reliant de manière électriquement conductrice l'une à l'autre et court-circuitant les deux connexions de l'antenne (8) dans la position initiale et
- en ce que la ligne de raccordement électrique (13) est disposée de manière à être interrompue de manière irréversible lorsque la canette (1) est ouverte par le pivotement de l'élément d'ouverture (4) de la position initiale jusque dans la position d'ouverture et que l'antenne (8) est ainsi activée.

2. Canette selon la revendication 1, **caractérisée en ce que** la ligne de raccordement électrique (13) est disposée partiellement dans ou sur l'élément de liaison (12) et partiellement dans ou sur l'élément d'ouverture (4) et la ligne de raccordement (13) se rompt lors du pivotement de l'élément d'ouverture (4) par rapport à l'élément de liaison (12).

3. Canette selon la revendication 1 ou 2, **caractérisée en ce que** la ligne de raccordement électrique (13) présente un point de rupture théorique dans au moins une zone intermédiaire entre l'élément de liaison (12) et l'élément d'ouverture (4), qui se rompt lors du pivotement de l'élément d'ouverture (4) par rapport à l'élément de liaison (12).

4. Canette (1) selon une des revendications précédentes, **caractérisée en ce**
- **que** l'antenne (8) et la puce de transpondeur (9) sont disposées sur une feuille commune, en particulier une étiquette adhésive commune (18), qui est disposée sur l'élément d'ouverture (4), en particulier collée sur l'élément d'ouverture (4), dans laquelle en particulier
- la ligne de raccordement électrique (13) est disposée dans ou sur la feuille et en ce que la ligne de raccordement (13) et la feuille sont disposées partiellement sur l'élément d'ouverture (4) et partiellement sur l'élément de liaison (12).

5. Canette selon une des revendications précédentes, **caractérisée en ce**
- **que** l'élément de liaison (12) et/ou l'élément d'ouverture (4) présentent un corps partiellement électriquement conducteur et en ce que la ligne de raccordement (13) est formée par la partie électriquement conductrice du corps de l'élément de liaison (12) et/ou de l'élément d'ouverture (4) et/ou
- en ce que l'élément de liaison (12) est relié avec la paroi frontale (14) de la canette en ce que l'élément de liaison (12) est formé plat et s'étend ou repose fixement dans un plan parallèle à la paroi frontale (14) et est relié à celle-ci, dans laquelle l'élément de liaison (12) est notamment disposé de façon à tourner autour d'un axe se trouvant perpendiculaire au plan de la paroi frontale (14).

6. Canette (1) selon une des revendications précédentes, **caractérisée en ce que**, à une fréquence de transmission de la puce de transpondeur (9) dans la plage comprise entre 100 kHz et 1000 MHz, en particulier dans la plage de 120-135 kHz, dans la plage de 13 à 14 MHz ou dans la plage de 860-910 MHz, la conductivité électrique spécifique du matériau de support de l'élément d'ouverture (4) est inférieure à 1 S/m **et**/**ou**
- **en ce que** la permittivité électrique du matériau de support de l'élément d'ouverture (4) est inférieure à 100*8,854*10⁻¹² As/Vm **et**/**ou**
- **en ce que** la perméabilité magnétique du matériau de support de l'élément d'ouverture (4) est inférieure à 1,001*4*π*10⁻⁷ Vs/Am.

7. Canette (1) selon une des revendications précédentes, **caractérisée en ce que** la zone de fermeture (2) et la ligne de rupture théorique (3) sont formées sur une paroi frontale (14) de la canette (1).

8. Canette (1) selon une des revendications précédentes, **caractérisée en ce**
- **que** l'élément d'ouverture (4) est relié à la canette (1) par le biais d'un rivet (6), dans laquelle l'élément d'ouverture présente une zone de pression (10) reposant dans sa position initiale au niveau de la zone de fermeture (2), destiné à presser la zone de fermeture (2), dans laquelle notamment
- l'élément d'ouverture présente une zone d'actionnement (11) opposée à la zone de pression (10), dans laquelle la zone de pression (10) et la zone d'actionnement (11) sont délimitées l'une par rapport à l'autre par le rivet (6) et agissent ensemble comme un levier à deux bras articulé, en particulier par le biais du rivet (6).

9. Canette (1) selon la revendication 8, **caractérisée en ce que** l'élément d'ouverture (4) présente un élément de liaison (12) pouvant pivoter par rapport à son corps, qui est relié à la paroi frontale de la canette (1) par le biais du rivet (6).

10. Canette (1) selon une des revendications précédentes, **caractérisée en ce**
- **que**, dans la position initiale, la puce de transpondeur (9) est disposée dans une zone de l'élément d'ouverture (4) qui est plaquée sur la zone de fermeture (2) et/ou
- en ce que l'antenne (8) est conçue de forme annulaire et est en particulier disposée le long de la ligne périphérique de l'élément d'ouverture (4) dans une encoche.

11. Canette selon une des revendications précédentes, **caractérisée en ce que** l'élément d'ouverture (4) est formé en deux parties et présente une partie base (40) articulée sur la paroi frontale ainsi qu'une partie antenne (20) présentant un corps électriquement non conducteur et relié à la partie base (40), dans laquelle la puce de transpondeur (9) et l'antenne sont disposées, en particulier intégrées dans la partie antenne (20) et dans laquelle la partie base (40) présente au moins un prolongement (41, 42), en particulier deux prolongements (41, 42), qui sont reliés à la partie antenne (20).

12. Canette selon la revendication 11, **caractérisée en ce que** la partie antenne (20) présente une partie boîtier (21) et un prolongement annulaire (22), dans laquelle l'antenne s'étend au moins partiellement dans le prolongement annulaire (22).

13. Canette selon la revendication 11 ou 12, **caractérisée en ce que** la partie boîtier (21) présente au moins un évidement d'encliquetage, en particulier deux évidements d'encliquetage, dans lesquels les extrémités du prolongement (41, 42), en particulier les deux extrémités des prolongements (41, 42), de la partie base (40) sont engagées, en particulier encliquetées et/ou en ce que le prolongement ou les prolongements (41, 42) de la partie base (40) sont plaqués sur le prolongement annulaire (22) de la partie antenne (20).

14. Canette selon une des revendications 11 à 13, **caractérisée en ce que** la partie antenne (20) présente une traverse (23) dans la région du prolongement annulaire (22), qui relie une première partie du prolongement annulaire (22) à une seconde partie du prolongement annulaire (22) et forme deux évidements, dans laquelle un des évidements (26) est traversé par le rivet (6) et la traverse (23) est disposée, dans la position initiale, au-dessous de la partie de liaison (12) et se rompt lors de l'actionnement de l'élément d'ouverture (4).
